Europäisches Patentamt

European Patent Office

Office européen des brevets

(11) Publication number: **0 237 656 B1**

# EUROPEAN PATENT SPECIFICATION

(45) Date of publication of patent specification: **08.04.92** (51) Int. Cl.⁵: **H04M 19/00**

(21) Application number: **86202325.6**

(22) Date of filing: **18.12.86**

(54) **Telecommunication line circuit and amplifier circuit used therein.**

(30) Priority: **20.12.85 BE 2060894**

(43) Date of publication of application:
**23.09.87 Bulletin 87/39**

(45) Publication of the grant of the patent:
**08.04.92 Bulletin 92/15**

(84) Designated Contracting States:
**FR GB IT**

(56) References cited:
**BE-A- 898 049**

(73) Proprietor: **ALCATEL N.V.**
**Strawinskylaan 537 (World Trade Center)**
**NL-1077 XX Amsterdam(NL)**

(84) Designated Contracting States:
**FR GB IT**

(72) Inventor: **Pieters, Jozef Frans Pharida**
**Noendries 4**
**B-9000 Gent(BE)**
Inventor: **Moons, Elve Desiderius Jozef**
**Van Noorstraat 5**
**B-2018 Antwerp(BE)**

(74) Representative: **Vermeersch, Robert et al**
**BELL TELEPHONE MANUFACTURING COM-**
**PANY Naamloze Vennootschap Patent De-**
**partment Francis Wellesplein 1**
**B-2018 Antwerpen(BE)**

Rank Xerox (UK) Business Services

## Description

The present invention relates to a telecommunication line circuit including line amplifiers whose outputs are coupled to respective line conductors of a telecommunication line via feed resistances, and a resistance synthesis circuit for synthesizing a wanted resistance from said feed resistances, said synthesis circuit having inputs coupled with said feed resistances and an output coupled to supply inputs of said line amplifiers, said output being constituted by the output of an operational amplifier circuit which is controlled by a control voltage and to which said inputs are coupled through a loop current sensing circuit and an AC filter.

Such a circuit is already known from Belgian patent No. 898049. Therein the control voltage is applied to the non-inverting input of the operational amplifier through a resistance, whilst the filter circuit is coupled to the same input through at least a buffer amplifier in order that this filter circuit should not be loaded by the resistance. Drawbacks of this known circuit are that such a buffer amplifier introduces a DC offset and produces noise so that the accuracy of the DC synthesizing circuit is adversely affected and that noise appears on the line. Moreover, such a buffer amplifier occupies a relatively large surface when the line circuit is integrated on a chip.

An object of the present invention is to provide a telecommunication line circuit of the above type, but which does not present these drawbacks.

According to the invention this object is achieved due to the fact that said AC filter is directly connected to the non-inverting input of said operational amplifier circuit whose output is coupled through a negative feedback circuit to its inverting input which is connected to a control circuit to which said control voltage is applied and which is able to transform said control voltage into a control current and to derive this current from said inverting input.

By transforming the control voltage into a current and deriving it from the inverting input of the operational amplifier, it has been possible to directly connect the filter circuit to the non-inverting input of this amplifier, i.e. without the use of a buffer amplifier. In this way the accuracy of the DC impedance synthesis circuit is increased and the noise performance of the circuit is improved because all unwanted signals are prevented from reaching the line. Also the circuit may be integrated on a smaller chip surface.

The above mentioned and other objects and features of the invention will become more apparent and the invention itself will be best understood by referring to the following description of a preferred embodiment taken in conjunction with the accompanying drawings wherein :

Fig. 1 shows a telecommunication circuit including a line circuit according to the invention;

Figs. 2 and 3 together represent this line circuit in more detail.

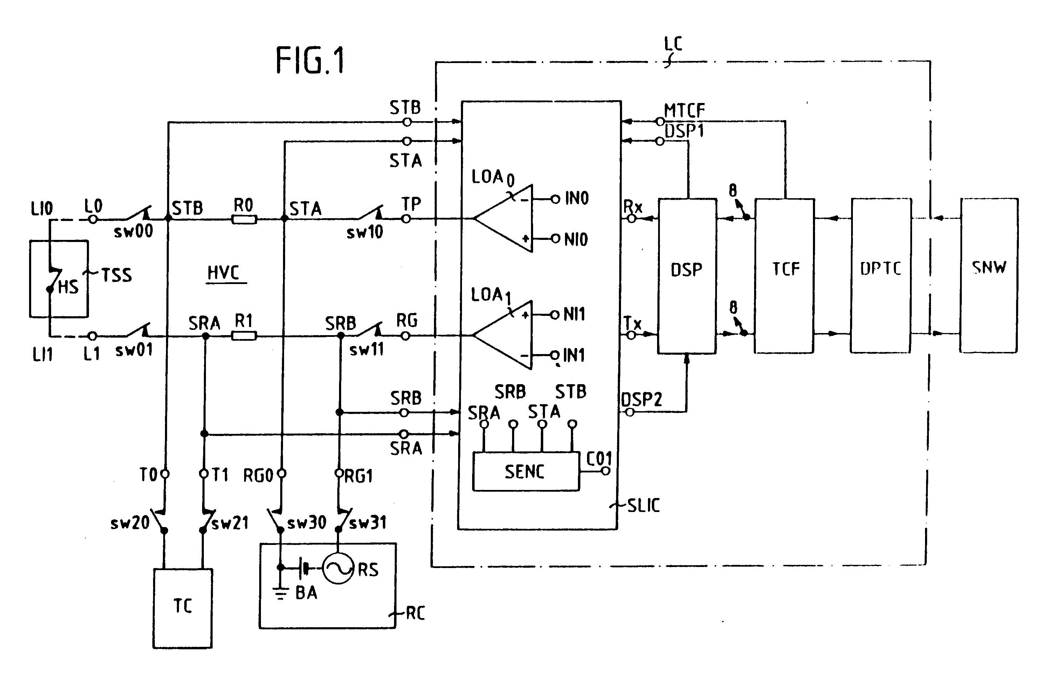

The telecommunication circuit shown in Fig. 1 includes a line circuit LC which is connected in cascade with a switch circuit HVC between a telecommunication line with conductors LI0 and LI1, connected to a subset TSS, and a switching network SNW. LC, HVC and SNW are located in a telecommunication exchange. Line circuit LC includes the cascade connection of a SLIC, a Digital Signal Processor DSP, a TransCoder and Filter circuit TCF and a Dual Processor Terminal Controller DPTC.

Subset TSS includes a normally open hook switch HS connected between the line conductors LI0 and LI1.

Switch circuit HVC is for instance of the type disclosed in Belgian patent No. 897 772. It includes 4 pairs of bidirectional switches sw00, sw01 to sw30, sw31 as shown and has line terminals L0 and L1 connected to line conductors LI0 and LI1 respectively, test terminals T0 and T1 connected to a test circuit TC, ringing terminals RG0 and RG1 connected to a ringing circuit RC, tip and ring terminals TP and RG connected to the like named outputs of line amplifiers LOA0 and LOA1 in the SLIC respectively and terminals STA, STB, SRA, SRB connected to like named terminals of a sensing circuit SENC in the SLIC. In HVC the line terminals L0/L1 are connected to TP/RG via the series connection of sw00/01, 50 ohms line feed resistors R0/1 and sw10/11 respectively. The respective junction points STB and SRA of sw00 and R0 and of sw01 and R1 are connected to TC via sw20 and sw21 respectively, whilst the respective junction points STA and SRB of R0 and sw10 and of R1 and sw11 are connected to RC via sw30 and sw31 respectively. As shown for a switched through connection, series switches sw00, sw01, sw10 and sw11 are closed, whereas the other shunt switches are open. All the switches are controlled by the SLIC so that HVC is able to establish either one of the following connections : between TSS and SLIC (LOA0, LOA1 and SENC); TC and TSS; SLIC (LOA0, LOA1) and TC; RC and TSS; RC and SLIC (SENC). The function of TC is to test the connection to TSS and to the SLIC and that of RC is to apply a ringing signal to this line and to SENC in the SLIC. For instance, RC is able to connect ground through sw30 and the negative battery BA of -48 or -60 Volts in series with a ringing source RS of 90 Volts RMS through sw31.

The Subscriber Line Interface Circuit SLIC which is integrated on a chip is a two-wire bidirectional circuit on the side of TSS and a four-wire one towards SNW. It has a speech receive input terminal Rx ( with ground return) and a speech transmit output Tx (again with ground return), Rx and Tx being connected to DSP. The SLIC further has a 12 kHz or 16 kHz metering signal input terminal MTCF connected to TCF, data input and output terminals DSP1 and DSP2 connected to DSP and the above mentioned terminals STA, STB, SRA, SRB, TP and RG connected to HVC. The sensing circuit SENC included in the SLIC is of the type disclosed in European published application No. 85200774.9 and provides at its output a composite DC/AC voltage considered with respect to VAG which is for instance equal to $\frac{r \cdot i}{2}$

wherein r = R0 = R1 and i is the line current comprising a DC component and possibly an AC component constituted by a speech signal and/or a metering signal.

The digital signal processor DSP converts a digital speech signal received from TCF into an analog speech signal which is then applied to the speech receive terminal Rx of the SLIC. Conversely it converts an analog speech signal received via the speech transmit terminal Tx of the SLIC into a digital version which is applied to TCF. DSP also includes an echo canceller circuit.

The following drive bits are transmitted by DSP to data input terminal DSP1 of the SLIC :

- BR0 and BR1 : polarity reversal bits indicating that the polarity on RG and on TP has to be made high (1) or low (0) according to the following table :

| BR0 | BR1 | TP | RG | condition |
|---|---|---|---|---|
| 0 | 0/1 | 1 | 0 | normal condition |
| 1 | 0 | 0 | 1 | reversal condition |
| 1 | 1 | 0 | 0 | ground signalling condition |

This last condition is called ground signalling condition because it allows signalling in TSS on each of the line conductors by applying a ground thereon. Indeed, because TP and RG are at a low voltage current is able to flow from this ground towards the line circuit;
- FR : a feed characteristic bit to indicate that the synthesized line feed resistance should be high ohmic (0) or low ohmic (1. The meaning of synthesized feed resistance will be explained later;
- CT0 and CT1 : current limit bits indicating four possible maximum line current conditions;
- BV : a battery bit indicating that the exchange battery V- is -48 Volts (0) or -60 Volts (1);
- SMPI : a metering signal bit indicating that a metering signal applied to SLIC by TCF has to be allowed in the SLIC (1) or not (0);
- RNG : a ringing bit indicating that ringing is to be performed (1) or not (0);
- BPW : a power bit indicating that the SLIC should be put in the power up mode (1) or not (0);
- HB : a high bias bit indicating that the SLIC should be put in a high bias mode (1) or not (0);
- RY0, RY1, RY2 : three relay drive bits indicating that a corresponding one of the relays (not shown) having the above mentioned contacts sw00 to sw31 should be operated (1) or not (0).

Finally, the DSP also receives on its data input terminal DSP2 control data bits transmitted by the SLIC. These bits are the same as those transmitted to DSP1 except that the four bits FR, RNG, CT0 and CT1 are respectively replaced by :
- SHD : a switch hook detection bit indicating that the line loop between SLIC and TSS is open (0) or closed (1);
- RT : a ring trip indicating that the ringing signal applied to line by the circuit RC has to be switched off (1) or not (0);
- OC : an overcurrent or overtemperature bit indicating that the temperature of LOA0 and/or LOA1 is above (1) or below (0) a predetermined value;
- VPB : a bit indicating that ground detection has to be performed on the line conductors (1) or not (0). In the present case VPB is always 0.

The TCF performs a transcoding operation on digital signals received from the DSP and the DPTC and is also adapted to supply a metering signal MTCF to the SLIC. These operations are described in the Belgian patents 897 771 and 897 773.

Finally, the DPTC performs the general control of the SLIC. Details of this circuit are described in the Belgian patents 898 959 and 898 960.

To be noted that whereas HVC, SLIC and DSP are individually associated to the telephone line, the circuits TCF and DSP are provided in common for a number of such lines, e.g. 8 lines, as indicated by the multipling arrows.

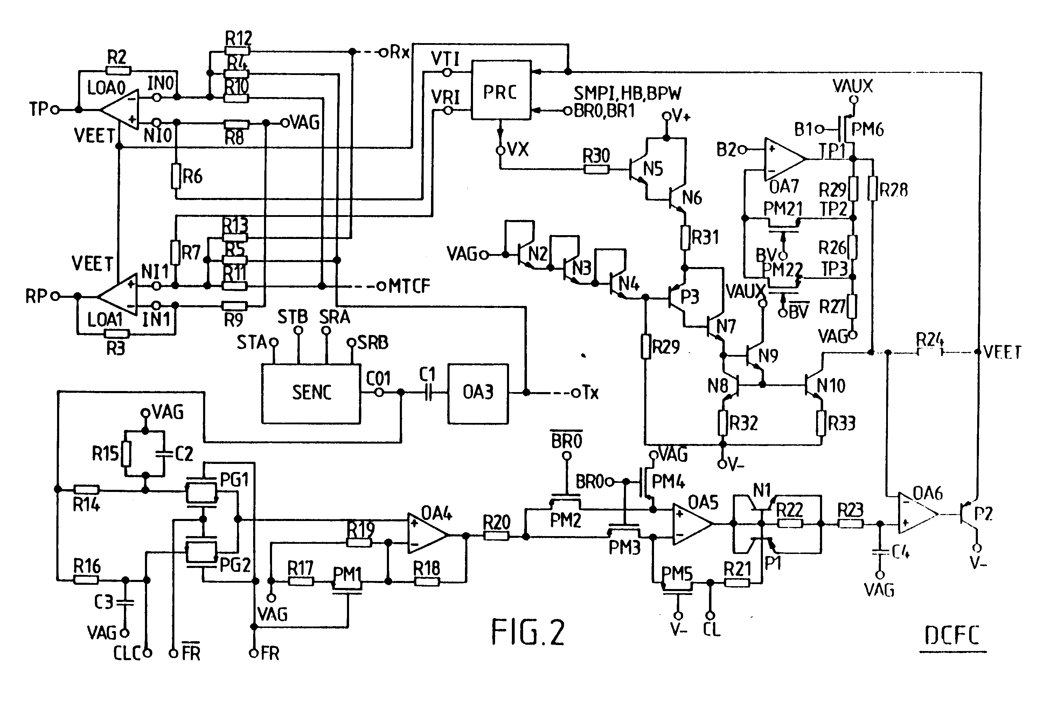

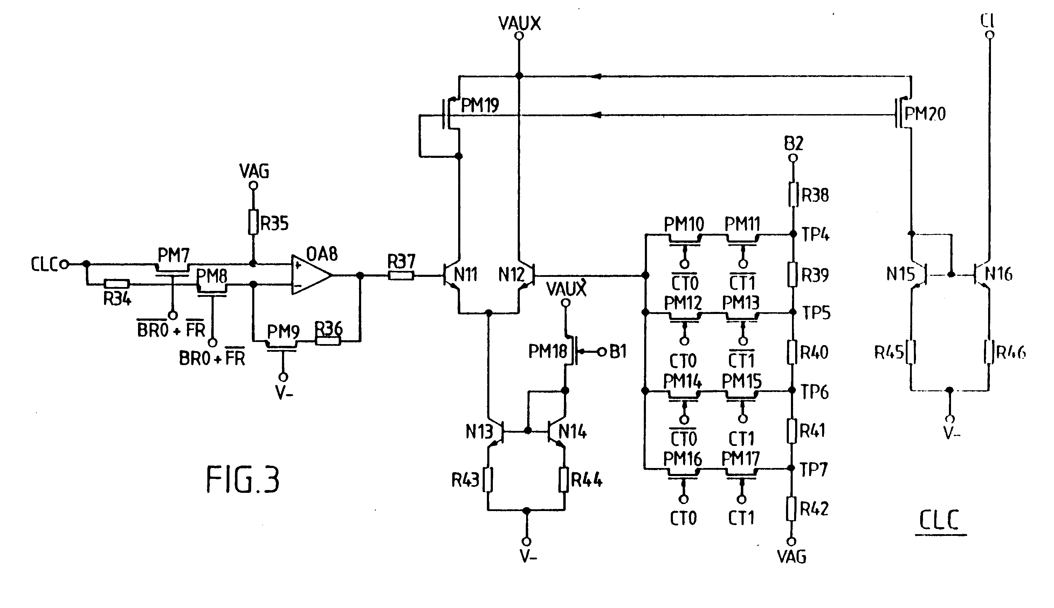

Reference is now made to Figs. 2 and 3 representing the SLIC of Fig. 1 in more detail. This circuit has some similarities with the one disclosed in Belgian patent no. 898049. This circuit operates with the following voltages :

V+        which is at 0 Volts or ground potential;

V-        which is equal to -48 or -60 Volts e.g. -48 Volts;

VAUX     which is an auxiliary voltage 15 Volts above V-, e.g. -33 Volts;

VAG       which is a voltage half-way between V- and VAUX, i.e. substantially equal to 7,5 Volts above V-, e.g. -40,5 Volts;

VEET     which is a regulating voltage;

 B1 which is a continuously applied constant voltage equal to about 3 Volts below VAUX;

 B2 which is a so called bandgap reference voltage, e.g. equal to 2.41 Volts above VAG.

As shown in Fig. 2, the output CO1 of the sensing circuit SENC is connected to the inputs VEET of both LOA0 and LOA1, which have respective feedback resistances R2 and R3, through a DC feedback circuit DCFC which together with the amplifiers LOA0 and LOA1, the equal feed resistances R0 an R1 and the sensing circuit SENC constitutes a resistance synthesis circuit, i.e. a circuit to convert the value of each of the feed resistances R0 and R1 into a wanted resistance value. The output CO1 of the sensing circuit SENC is also connected via a DC blocking capacitor C1 in series with an amplifier stage OA3 including an operational amplifier, on the one hand to the inverting input INO of LOA0 via resistance R4 and, on the other hand, to the non-inverting input NI1 of LOA1 through resistance R5 equal to R4. The amplifiers LOA0 and LOA1, the resistances R0 and R1, the sensing circuit SENC, the amplifier stage OA3 and the resistances R4 and R5 constitute an AC impedance synthesis circuit able to convert the resistance value of R0 and R1 into a wanted AC impedance.

The non-inverting inputs NIO of LOA0 and NI1 of LOA1 are connected through equal resistances R6 and R7 to the respective outputs VTI and VRI of a polarity reversal circuit PRC of the type disclosed in the copending Belgian patent application of even date entitled "Polarity reversal circuit". As disclosed in this application the circuit PRC has inputs controlled by the above mentioned drive bits SMPI, HB, BPW, BR0 and BR1 and is able to apply a DC supply voltage V+ minus x to VTI and a DC voltage VEET plus x to VRI (normal condition) or vice-versa (reversal condition) or even VEET plus x to both VTI and VRI (ground signalling condition). The voltage x is chosen in function of the magnitudes of the speech signal and the metering signal and/or of one or more of the drive bits SMPI, HB, BPW. The PRC also provides at its output VX a voltage equal to V+ minus 2x which is applied to the DC feedback circuit DCFC.

The non-inverting input NI0 of LOA0 and the inverting input IN1 of LOA1 are connected to VAG through respective equal bias resistances R8 and R9. The above mentioned outputs MTCF of TCF and Rx of DSP are coupled to the inverting input IN0 of LOA0 and to the non-inverting input NI1 of LOA1 via not shown means (indicated by dashed lines) and respective resistances R10, R11 and R12, R13. R10 and R12 are equal to R11 and R13 respectively. Finally, the output of the amplifier stage OA3 is also coupled via not shown means (also indicated by a dashed line) to the transmit output Tx. The not shown means are without importance for understanding the invention and are for instance of the type disclosed in the above mentioned European patent application.

The above mentioned DC feedback circuit DCFC which will be described in detail hereinafter has the following terminals :

- an input connected to the output CO1 of the sensing circuit SENC;
- an input connected to the output VX of the polarity reversal circuit PRC;
- inputs controlled by the above mentioned drive bits FR, BV, BR0, BR1, CT0 and CT1 and by the complements thereof. The function of the other drive bits and of the control bits is not explained in the present description;
- an output VEET connected to the polarity reversal circuit PRC and to the like named inputs of both the line amplifiers LOA0 and LOA1.

On the last mentioned output the circuit DCFC generates a regulating voltage VEET which is function of the above line current i and drive bits. The current limiting bits CT0 and CT1 more particularly control a current limiting circuit CLC which forms part of the DCFC and which will be considered later with reference to Fig. 3.

The output CO1 of the sensing circuit SENC is connected to a circuit controlled by the feed characteristic bit FR and the complement $\overline{FR}$ thereof. More particularly, this output CO1 is connected to the non-inverting input of an operational amplifierOA4 via the series connection, on the one hand of a low pass filter R14, R15, C2 and a transfer gate PG1 and, on the other hand, of a low pass filter R16, C3 and a transfer gate PG2. The low pass filter R14, R15, C2 comprises the series resistance R14 and a shunt branch constitued by resistance R15 and capacitance C2 in parallel, whereas the low pass filter R16, C3 comprises the series resistance R16 and the shunt capacitance C3. Each of these filters is used to filter the 12 kHz or 16 kHz metering signal from the above mentioned composite AC/DC voltage signal generated at the output CO1 of the sensing circuit SENC. Due to the presence of two resistances R14, R15 the filter R14, R15, C2 provides a higher attenuation than the filter R16, C3, as is required in the low ohmic case. This will become clear later. Moreover, these resistances R14 and R15 are external to the chip constituting the SLIC and can therefore be easily replaced by other ones. The transfer gates PG1 and PG2 are controlled by bits FR and $\overline{FR}$ in a reverse way. The drive bit FR also controls a PMOS transistor PM1 which is connected in series with a bias resistance R17 between VAG and the inverting input of the amplifier OA4 which has a negative feedback resistance R18. The series connection of R17 and PM1 is shunted by a resistance R19.

The circuit just described operates as follows when a low ohmic (FR = 1) or a high ohmic line condition (FR = 0) has to be realised.

Low ohmic line condition (FR = 1)

In this case transfer gate PG1 is conductive, whereas transfer gate PG2 and transistor PM1 are both blocked. As a consequence the voltage, considered with respect to VAG, and equal to $\frac{r^i}{2}$ provided at the output of the sensing circuit SENC is attenuated and filtered in the filter circuit R14, R15, C2 and then amplified by a factor equal to

$$1 + \frac{R18}{R19}.$$

In a preferred embodiment R18 = R19 so that this factor is then equal to 2.

High ohmic line condition (FR = 0)

In this case transfer gate PG1 is blocked, whereas transfer gate PG2 and transistor PM1 are both conductive. As a consequence the last mentioned voltage $\frac{r^i}{2}$ is filtered in the filter circuit R16, C3 and then amplified by a factor

$$1 + \frac{R18\,(R17 + R19)}{R17\,.\,R19}$$

which is larger than in the low ohmic line condition. In a preferred embodiment R18 = R19 = $\frac{60}{14}$ R17 so that the gain factor is larger than 5. As will become clear later, this will result in a voltage VEET of higher value and hence in a smaller line current. It should be noted that since in the high ohmic line condition the gain has to be increased, the filter R16, C2 does not include a resistance comparable to R15 and which would decrease this gain.

The output of amplifier OA4 is connected to a unity gain circuit controlled by the polarity reversal bit BR0 and the complement $\overline{BRO}$ thereof. More particularly, this output is connected via a common resistance R20 and individual PMOS transistors PM2 and PM3 to the non-inverting and inverting inputs of an operational amplifier OA5 respectively. PM2 and PM3 are controlled by the respective bits $\overline{BRO}$ and BR0. The latter bit BR0 also controls PMOS transistor PM4 connected between VAG and the non-inverting input of OA5. The latter amplifier OA5 has a negative feedback branch comprising PMOS transistor PM5 and resistance R21 in series, the junction point of PM5 and R31 being connected to the output CL of the current limiting circuit CLC to be considered later. The gate of PM5 which is identical to PM3 is connected to the supply voltage V- and PM5 is therefore continuously conductive.

The circuit just described operates as follows in the normal (BR0 = 0) and other (BR0 = 1) polarity conditions mentioned above :

Normal condition (BR0 = 0)

In this case transistors PM3, PM4 and PM5 are conductive, whereas transistor PM2 is blocked. As a consequence the output voltage, considered with respect to VAG, provided by the amplifier OA5 is amplified by a factor equal to

$$- \frac{R21}{R20}.$$

In a preferred embodiment R20 = R21 so that the latter gain factor is equal to -1.

Other conditions (BR0 = 1)

In these cases transistors PM2 and PM5 are conductive, whereas transistors PM3 and PM4 are blocked. As a consequence the voltage, considered with respect to VAG, generated at the output of the amplifier OA5 is amplified by a factor equal to 1.

It should be noted that the continuously conductive transistor PM5 in the negative feedback path of OA5 is provided in order that its impedance Z should compensate the same impedance of PM3 in the forward path i.e. in the path by which resistance R20 is connected to OA5. Indeed, for instance in the case BR0 = 0 the gain factor is in fact equal to

$$- \frac{R21 + Z}{R20 + Z}$$

instead of

$$- \frac{R21}{R20} = -1.$$

From the above it follows that the voltage collected from the line is inverted twice, i.e. in SENC and OA5, in the normal condition (BR0 = 0) and once in the other conditions (BR0 = 1). In this way the signal at the output of amplifier OA5 is independent from the direction of the line current.

The output of amplifier OA5 is connected to the non-inverting input of an operational amplifier OA6 via a filter circuit which comprises series resistances R22 and R23 and shunt capacitance C4. The resistance R22 is connected in parallel with the emitter-to-base junction diodes of the diode-connected NPN transistor N1 and PNP transistor P1. The purpose of this filter circuit is to filter small residual AC signals, such as speech, as well as to pass to its output large DC signals, such as the one produced when a subscriber goes off hook, substantially without distortion and very rapidly. This is achieved as follows : for a large positively or negatively directed DC voltage variation transistor N1 or P1 becomes conductive and short-circuits the resistance R22 due to which the time constant of the filter R22, R23, C4 is reduced so that this voltage variation is rapidly supplied to OA6. On the contrary, for a smaller voltage variation the resistance R22 is not short-circuited so that this variation is more filtered before being supplied to OA6. The voltage applied to the input of OA6 is called V1 + VAG.

The inverting input of amplifier OA6 is controlled from the output VX of the polarity reversal circuit PRC as well as from a circuit controlled by the battery bit BV and the complement $\overline{BV}$ thereof. The inverting input of OA6 is connected to its output via resistance R24 and the emitter-to-base junction of PNP transistor P2 whose collector is connected to V-. The emitter of P2, which constitutes the output VEET is connected to the PRC and to the inputs VEET of both the line amplifiers LOA0 and LOA1. The circuit controlled by BV and $\overline{BV}$ includes an operational amplifier OA7 and an associated voltage divider circuit connected between VAUX and VAG and comprising the emitter-to-collector path of PMOS transistor PM6 and resistances R25, R26 and R27 in series. The base of transistor PM6 is continuously biased by the constant voltage B1, so that PM6 continuously supplies a constant current to the last mentioned voltage divider. The non-inverting input of amplifier OA7 is connected to the bandgap reference voltage B2 and the tapping points TP2 and TP3 of the above voltage divider are connected to its inverting input via respective PMOS transistors PM21 and PM22 which are controlled by the battery bits BV and $\overline{BV}$ respectively. Tapping point TP1 of this voltage divider is connected to the inverting input of amplifier OA6 via resistance R28.

The circuit just described operates as follows :
- in case BV = 0 (battery of -48 Volts) transistors PM21 and PM22 are conductive and blocked respectively so that the reference voltage, say V2 + VAG, applied to the inverting input of amplifier OA6 via resistance R28, is equal to the reference voltage B2, also considered with respect to VAG, multiplied by a gain factor equal to

$$1 + \frac{R25}{R26 + R27};$$

- in case BV = 1 (battery of -60 Volts) this gain factor is equal to

$$1 + \frac{R25 + R26}{R27}$$

because transistors PM21 and PM22 are then blocked and conductive respectively. This factor is larger than in the case BV = 0 and gives rise to a smaller VEET, as will become clear later. Thus the supply of a larger line current is ensured since this current is function of V+ - VEET - 2x.

In a preferred embodiment

$$\frac{R25}{R26} = \frac{65}{20}$$

and R27 = 4 R26 so that the gain factor is equal to 1.65 for BV = 0 and larger than 2 for BV = 1 respectively.

The output VX of the polarity reversal circuit PRC is connected to the junction point of three series connected diode connected NPN transistors N2 to N4 and a resistance R29 via the series connection of a resistance R30, the base-to-emitter junctions of NPN transistors N5 and N6 which form a Darlington pair, a resistance R31 and the base-to-emitter junction of a PNP transistor P3 which forms a Common Emitter - Common Collector pair with NPN transistor N7. The collectors of N5 and N6 are both connected to the supply voltage V+, and the emitter and collector of transistor P3 are joined to the collector and base of transistor N7 respectively. The emitter of the latter transistor N7 is connected to a current source comprising NPN transistors N8, N9 and N10 and resistances R32 and R33. More particularly, this emitter is connected to the supply voltage V- via the collector-to-emitter path of N8 and resistance R32 in series. The emitter of N7 is also connected to the base of transistor N9 whose collector-emitter path is connected between VAUX and the base of transistor N8. Finally, the base of current source transistor N8 is connected to the base of transistor N10 whose emitter is connected to V- via resistance R33 and whose collector is connected to the inverting input of amplifier OA6.

Because the voltage at the output VX of the PRC is equal to V+ -2x and when calling V(N) the VBE of a transistor N, the voltage at the upper end of resistance R31 is equal to

V+ -2x - V(R30) - V(N5) - V(N6),

wherein V(R30) is the voltage drop in protection resistance R30. On the other hand the voltage at the lower end of the resistance R31 is equal to

VAG - V(N2) - V(N3) - V(N4) + V(P3).

The circuit is now so adjusted, by means of resistance R29 and possibly also by resistance R30, that the VBEs of the transistors are cancelled so that the current I flowing through the resistance R31 is given by

$$I = \frac{V+ - VAG - 2x}{R31} \qquad (1)$$

This current flows to V- mainly via the collector-emitter paths of NPN transistors N7 and N8 and resistance R32 in series. Because of current mirror transistor N10 this current also flows in the collector of the latter transistor so that it is derived from the inverting input of amplifier OA6.

When calling, as already mentioned :

V1 + VAG the voltage applied to the non-inverting input of OA6;

V2 + VAG the reference voltage applied to the inverting input of OA6 via resistance R28,

one may calculate that the output voltage VEET of OA6 is given by the following relation :

$$VEET = VAG \ (1 - \frac{R24}{R31}) + \frac{R24}{R31} \ (V+ - 2x) +$$

$$(1 + \frac{R24}{R28}) \ V1 - \frac{R24}{R28} \ V2 \qquad (2)$$

In a preferred embodiment R24 = R31, so that in this case VEET is independent from VAG, and so that VEET is then given by :

VEET = V+ -2x + 13V1 - 12V2    (3)

$$\frac{R24}{R28} = 12,$$

The current limiting circuit CLC shown in Fig. 3 is now considered.

The output CLC of filter circuit R16, C3 is also connected, on the one hand to the non-inverting input of operational amplifier OA8 via PMOS transistor PM7 and, on the other hand to the inverting input of OA8 via resistance R34 and PMOS transistor PM8 in series. The non-inverting input of OA8 is connected to VAG through bias resistance R35 and its inverting input is connected to its output via PMOS transistor PM9 and resistance R36 in series. The gates of transistors PM7 and PM8 are controlled by the Boolean functions $\overline{BRO} + \overline{FR}$ and BRO + $\overline{FR}$ respectively, whereas the base of transistor PM9 is connected to V- and is therefore continuously conductive.

The circuit just described operates as follows :

- when FR = 0 (high ohmic line condition) both transistors PM7 and PM8 are blocked and no current limitation is performed;
- when FR = 1 (low ohmic line condition) the circuit operates either as an inverter (BR0 = 0) or as a follower (BR0 = 1) in order that in all the conditions (BR0 = 1) a signal independent from the direction of the current line should be supplied to the current limiting circuit proper which is connected to the output of amplifier OA8. Indeed :
- when BR0 = 0, transistors PM7 and PM8 are blocked and conductive respectively so that the signal applied to the circuit is multiplied by a gain factor equal to -

$$\frac{R36}{R34}$$

or -1 when R34 = R36;
- when BR0 = 1, transistors PM7 and PM8 are conductive and blocked respectively, so that the gain factor is then equal to 1.

Again transistor PM9 is provided in order to compensate the impedance of PM8.

The output of amplifier OA8 is connected via a resistance R37 to a first input of a differential amplifier whose other input is connected to tapping points TP4 to TP7 of a voltage divider via the pairs of series connected PMOS transistors PM10, PM11; PM12, PM13; PM14, PM15 and PM16, PM17 controlled by the current limit bits $\overline{CTO}$, $\overline{CT1}$; CTO, $\overline{CT1}$; $\overline{CTO}$, CT1 and CT0, CT1 respectively. The voltage divider comprises resistances R38 to R42 connected in series between bandgap reference voltage B2 and VAG. The inputs of the differential amplifier are constituted by the bases of NPN transistors N11 and N12 whose emitters are connected to a common bias current source comprising PMOS transistor PM18, NPN

EP 0 237 656 B1

transistors N13 and N14 and resistances R43 and R44. The supply source VAUX is connected to V- via the source-to-drain path of PM18 which is controlled by bias source B1, the collector-to-emitter path of diode connected transistor N14 and resistance R44 in series. The joined emitters of N11 and N12 are connected to V-via the collector-to-emitter path of current mirror transistor N13 and resistance R43 in series. The base of N13 is connected to both the collector and base of N14. The collector of N12 is connected to VAUX which is connected to the collector of transistor N11 via the diode connected PMOS transistor PM19 which forms part of a current source/current mirror configuration. This configuration further includes PMOS transistor PM20, NPN transistors N15 and N16 and resistances R45 and R46. More particularly, the gate of PM19 is connected to that of PM20 whose source is connected to VAUX and whose drain is connected to V- via the collector-to-emitter path of diode connected transistor N15 and resistance R45 in series. The base of transistor N15 is connected to that of transistor N16 whose emitter is connected V- via resistance R46 and whose collector constitutes the output CL of the current limiting circuit CLC and is connected to the junction point of transistor PM5 and resistance R21.

The circuit just described operates as follows. As long as the input signal applied to the base of transistor N11 is smaller than that applied to the base of transistor N12 and which depends on the value of the current limit bits CT0 and CT1, the constant current provided by the current source/current mirror circuit N13, N14, PM18 mainly flows through transistor N12 so that no current flows in the collector-to-emitter path of transistor N16 and that the operation of the circuit including amplifier OA5 is not influenced.

On the contrary, when due to an increase of the line current, e.g. by a short-circuit, the input signal applied to the base of transistor N11 becomes larger than that applied to the base of transistor N12, the constant current provided by the circuit N13, N14, PM18 mainly flows through transistor N11. It is mirrored in the collector of transistor N16 via transistors PM19, PM20 and N15. As this current is withdrawn from the inverting input of amplifier OA5 less current flows through the feedback resistance R21 thereof so that the output voltage of OA5 is increased. This means that the above mentioned voltage V1 applied to the non-inverting input of amplifier OA6 is also increased and that consequently, as follows from the relation (3), the regulating voltage VEET is increased too. The effect of such an increase is to limit the line current, as required. It is clear from the above that the start of this line current decrease is function of the bits CT0 and CT1 which together determine the bias of transistor N12.

To appreciate the above described circuit the following should be noted. Reference is hereby made to the above mentioned Belgian patent No 898049.

In the latter patent the function of the circuit R14, R15, C2 is performed by separate filter and voltage divider circuits which are linked by a buffer amplifier in order that the voltage divider circuit should not constitute a load for the filter circuit. A drawback of the use of such a buffer amplifier is that it introduces a DC offset in the DC impedance synthesizing loop, that it produces noise and that it occupies a relatively large surface on the chip. In the circuit, described above the circuit R14, R15, C2 has a filter as well as a voltage divider function, so that it may be coupled to the high impedance non-inverting input of operational amplifier OA4 without the use of a buffer amplifier. Thus the accuracy of the regulating voltage VEET and therefore of the synthesized DC impedance is increased, the noise factor of the circuit is improved and the required chip surface is decreased.

In the last mentioned Belgian patent use is made of a so-called absolute value circuit including two operational amplifiers (not shown in this patent) to make the DC impedance synthesis independent from the direction of the line current. In the present circuit the same result is achieved by the use of a single amplifier OA5 controlled by the bit BRO. Thus again the present circuit has a better performance than the known one.

It should also be noted that the present circuit does not affect the DC level of the signals applied to it since these signals are either passed or inverted. This is not the case with the last mentioned absolute value circuit.

Finally, in the circuit according to the above mentioned Belgian patent, the current limiting circuit is controlled from the output of the so-called absolute value circuit including two cascaded amplifiers producing a DC offset and to which the output of the sensing circuit is coupled via a filter circuit. On the contrary, in the present circuit the current limiting circuit is directly controlled from the filter circuit output.

While the principles of the invention have been described above in connection with specific apparatus, it is to be clearly understood that this description is made only by way of example and not as a limitation on the scope of the invention.

**Claims**

1. Telecommunication line circuit including line amplifiers (LOA0/1) whose outputs are coupled to

9

respective line conductors (LI0/1) of a telecommunication line via feed resistances (R0/1), and a resistance synthesis circuit for synthesizing a wanted resistance from said feed resistances, said synthesis circuit having inputs coupled with said feed resistances (R0/1) and an output (VEET) coupled to supply inputs (VEET) of said line amplifiers (LOA0/1), said output being constituted by the output of an operational amplifier circuit (OA6) which is controlled by a control voltage (VX) and to which said inputs are coupled through a line current sensing circuit (SENC) and an AC filter (R22, R23, C4), characterized in that said AC filter (K22, R23, C4) is directly connected to the non-inverting input of said operational amplifier circuit (OA6) whose output is coupled through a negative feedback circuit (P2, R24) to its inverting input which is connected to a control circuit to which said control voltage (VX) is applied and which is able to transform said control voltage (VX) into a control current and to derive this current from said inverting input.

2. Telecommunication line circuit according to claim 1, characterized in that said control voltage (VX) is coupled to a first end of a first resistance (R31) through a series of forwardly biased first transistor junction diodes (N5, N6) of a Darlington first amplifier (N5, N6), whilst a first supply voltage (VAG) is connected to the second end of said first resistance (R31) through a series of forwardly biased second transistor junction diodes (N2, N3, N4, P5) of which the one directly connected to said second end forms part of a common emitter-common collector amplifier (P6, N7) whose output is coupled to said inverting input of said operational amplifier circuit (OA6) through a current source/current mirror configuration, and that the junction point of said series and said one second transistor junction diode is coupled to a second supply voltage (V-) through a compensation second resistance (R29) which has such a value that the voltage drops across said series of first and second transistor junction diodes are equal.

3. Telecommunication line circuit according to claim 1, characterized in that the output (CO1) of said sensing circuit (SENC) is coupled through a second operational amplifier circuit (OA5) to said filter circuit (R22, R23, C4) which comprises a series branch constituted by series connected third (R22) and fourth (R23) resistances and a shunt branch constituted by a first capacitance (C4), said third resistance (R22) being shunted by first (N1) and second (N2) reversely branched diode connected first (N1) and second (N2) transistors whose bases and collectors interconnect the output of said second operational amplifier (OA5) and a negative feedback circuit thereof.

4. Telecommunication line circuit according to claim 1, characterized in that the output (CO1) of said sensing circuit (SENC) is coupled to said filter circuit (R22, R23, C4) through a third operational amplifier circuit (OA5) the gain of which is controlled by a first binary signal (BR0) which is indicative of a first or a second polarity condition of said line and in such a way that a corresponding positive or negative unity gain is realised.

5. Telecommunication line circuit according to claim 4, characterized in that said third operational amplifier circuit (OA5) has a negative feedback path constituted by the series connection of a continuously operated first transistor switch (PM5) and a fifth resistance (R21), as well as a forward path whose input is connected to the non-inverting and inverting inputs of said third operational amplifier circuit (OA5) through a second (PM2) and third (PM3) transistor switch respectively, said non-inverting input being moreover connected to a bias voltage (VAG) via a fourth transistor switch (PM4), and that said third (PM3) and fourth (PM4) transistor switches are controlled by said first binary signal (BR0), whilst said second transistor switch (PM2) is controlled by the complement ($\overline{BR0}$) of said first binary signal (BR0).

6. Telecommunication line circuit according to claim 5, characterized in that said first (PM5) and third (PM3) transistor switches are identical and the gain of said third amplifier circuit (OA5) is equal to unity.

7. Telecommunication line circuit according to claim 1, characterized in that the output (CO1) of said sensing circuit (SENC) is coupled to said filter circuit (R22, R23, C4) through a fourth operational amplifier circuit (OA4) the gain of which is controlled by a second binary signal (FR) which is indicative of said synthesized resistance and in such a way that the synthesized resistance has a corresponding lower or higher value.

8. Telecommunication line circuit according to claims 3, 5 and 7, characterized in that said second operational amplifier circuit is constituted by said third operational amplifier circuit (OA5), the output of said fourth operational amplifier circuit (OA4) being connected to the input of the forward path of said third amplifier circuit.

9. Telecommunication line circuit according to claim 7, characterized in that the output (CO1) of said sensing circuit (SENC) is coupled to the non-inverting input of said fourth operational amplifier circuit (OA4) through a parallel circuit with first and second branches, said first branch comprising the series connection of a metering signal filter and voltage division network (R14, R15, C2) and a fifth transistor switch (PG1) and said second branch comprising the series connection of a metering signal filter (R10, C2) and a sixth transistor switch (PG2), said fifth (PG1) and sixth (PG2) transistor switches being so controlled by said second binary signal (FR) and the complement ($\overline{FR}$) thereof in such a way that they are conductive when said synthesized resistance of lower and higher value has to be realised respectively.

10. Telecommunication line circuit according to claim 9, characterized in that a supply voltage (VAG) is coupled to the inverting input of said fourth operational amplifier circuit (OA4) via a second parallel circuit a first branch of which comprises a sixth resistance (R19) and a second branch of which comprises the series connection of a seventh resistance (R17) and a seventh transistor switch (PM1) which is so controlled by said second binary signal (FR) in such a way that it is conductive together with said sixth transistor switch (PG2).

11. Telecommunication line circuit according to claim 2, characterized in that a current limiting circuit which is controlled by current limiting signals (CT0, CT1) is coupled between the output (C01) of said sensing circuit (SENC) and the inverting input of said second operational amplifier circuit (OA5) and is able to derive current from said inverting input.

12. Telecommunication line circuit according to claim 11, characterized in that said current limiting circuit includes a differential amplifier (N11/14, PM8) having a common bias current source (PM18, N13, N14) as well as a first and a second input, the output (C01) of said sensing circuit (SENC) being coupled to said first input through a control circuit which provides an output signal independent from the direction of the line current and said second input being coupled to the output of a reference circuit controlled by said current limiting signals (CT0, CT1) and providing a selectable reference voltage at its output.

13. Telecommunication line circuit according to claims 4, 7 and 12, characterized in that said control circuit includes a fifth operational amplifier circuit (OA8) which is controlled by said first (BR0) and second (FR) binary signals in such a way that in case a higher synthesized resistance of higher value has to be realised a positive or negative unity gain is provided.

14. Telecommunication line circuit according to claims 9 and 13, characterized in that the output (C01) of said sensing circuit (SENC) is connected to the non-inverting and inverting inputs of said fifth operational amplifier circuit (OA8) through said metering signal filter in common and respective first and second individual branches, said first branch comprising an eighth transistor switch (PM7) and said second branch comprising the series connection of an eighth resistance (R34) and a ninth transistor switch (PM8), that the non-inverting input of said fifth operational amplifier circuit (OA8) is connected to a supply source (VAG) through a ninth resistance (R35) whilst the inverting input thereof is connected to its output through are series connection of a continuously operated tenth transistor switch (PM9) and an eleventh resistance (R36), and that said eighth (PM7) and ninth (PM8) transistor switches are controlled by respective Boolean functions $\overline{BR0} + \overline{FR}$ and $BR0 + \overline{FR}$, wherein BR0 and FR are said first and second binary central signals and $\overline{BR0}$ and $\overline{FR}$ are the complements thereof.

15. Telecommunication line circuit according to claim 14, characterized in that said ninth (PM8) and tenth (PM9) transistor switches are identical.

**Revendications**

1. Circuit ou joncteur de ligne de télécommunication comportant des amplificateurs de ligne (LOA0/1) dont les sorties sont accouplées à des fils respectifs (LI0/1) d'une ligne de télécommunication via des résistances d'alimentation (R0/1), et un circuit de synthèse de résistance pour réaliser la synthèse d'une résistance recherchée à partir desdites résistances d'alimentation, ledit circuit de synthèse ayant des entrées accouplées auxdites résistances d'alimentation (R0/1) et une sortie (VEET) accouplée auxdites entrées d'alimentation (VEET) desdits amplificateurs de ligne (LOA0/1), ladite sortie étant constituée par la sortie d'un circuit à amplificateur opérationnel (OA6) qui est commandé par une tension de commande (VX) et auquel lesdites entrées sont accouplées via un circuit de détection de courant de ligne (SENC) et un filtre de courant alternatif (R22, R23, C4), caractérisé en ce que ledit filtre de courant alternatif (R22, R23, C4) est connecté directement à l'entrée non-inverseuse dudit circuit à amplificateur opérationnel (OA6) dont la sortie est accouplée via un circuit à rétroaction négative (P2, R24) à son entrée inverseuse qui est connectée à un circuit de commande auquel est appliquée ladite tension de commande (VX), et qui est apte à transformer ladite tension de commande (VX) en un courant de commande et à dériver ce courant à partir de ladite entrée inverseuse.

2. Circuit de ligne de télécommunication selon la revendication 1, caractérisé en ce que ladite tension de commande (VX) est accouplée à une première borne d'une première résistance (R31) à travers une série de premières diodes de jonction à transistor polarisées à l'état passant (N5, N6) d'un premier amplificateur en configuration Darlington (N5, N6), tandis qu'une première tension d'alimentation (VAG) est connectée à la deuxième borne de ladite première résistance (R31) à travers une série de secondes diodes de jonction à transistor (N2, N3, N4, P5) polarisées à l'état passant dont l'une, qui est connectée directement à ladite deuxième borne, constitue une partie d'un amplificateur à émetteur communcollecteur commun (P6, N7) dont la sortie est accouplée à ladite entrée inverseuse dudit circuit à amplificateur opérationnel (OA6) à travers une configuration en miroir courant/source de courant, et en ce que le point de jonction de ladite série et de ladite seconde diode de jonction à transistor est accouplée à une deuxième tension d'alimentation (v-) à travers une deuxième résistance de compensation (R29) d'une valeur telle que les chutes de tension à travers lesdites séries des première et deuxième diodes de jonction à transistor soient égales.

3. Circuit de ligne de télécommunication selon la revendication 1, caractérisé en ce que la sortie (CO1) dudit circuit de détection (SENC) est accouplée à travers un deuxième circuit à amplificateur opérationnel (OA5) audit circuit de filtrage (R22, R23, C4) qui est composé d'une branche en série constituée par une troisième (R22) et une quatrième (R23) résistance connectées en série et une branche en parallèle constituée par un premier condensateur (C4), ladite troisième résistance (R22) étant shuntée par un premier (N1) et un deuxième (P1) transistors connectés en première (N1) et en deuxième (P1) diodes inversées, les bases et les collecteurs desdits transistors interconnectant la sortie dudit deuxième amplificateur opérationnel (OA5) et un circuit de rétroaction de cet amplificateur.

4. Circuit de ligne de télécommunication selon la revendication 1, caractérisé en ce que la sortie (CO1) dudit circuit de détection (SENC) est accouplée audit premier circuit de filtrage (R22, R23, C4) à travers un troisième circuit (OA5) à amplificateur opérationnel dont le gain est commandé par un premier signal binaire (BR0) qui est indicatif d'un premier ou d'un deuxième état de polarité de ladite ligne et de manière à réaliser un gain unitaire positif ou négatif correspondant.

5. Circuit de ligne de télécommunication selon la revendication 4, caractérisé en ce que ledit troisième circuit (OA5) à amplificateur opérationnel comporte un trajet à rétroaction constitué par la connexion en série d'un premier commutateur (PM5) à transistor en permanence à l'état passant et d'une cinquième résistance (R21), ainsi qu'un trajet direct dont l'entrée est connectée aux entrées non-inverseuse et inverseuse dudit troisième circuit (OA5) à amplificateur opérationnel, à travers respectivement un deuxième (PM2) et un troisième (PM3) commutateur à transistor, ladite entrée non-inverseuse étant connectée en outre à une tension de polarisation (VAG) via un quatrième commutateur à transistor (PM4), et en ce que lesdits troisième (PM3) et quatrième (PM4) commutateurs à transistor sont commandés par ledit premier signal binaire (BR0), tandis que ledit deuxième commutateur à transistor (PM2) est commandé par le complément ($\overline{BR0}$) dudit premier signal binaire (BR0).

6. Circuit de ligne de télécommunication selon la revendication 5, caractérisé en ce que lesdits premier (PM5) et troisième commutateurs à transistor sont identiques et en ce que le gain dudit troisième circuit amplificateur (OA5) est égal à l'unité.

7. Circuit de ligne de télécommunication selon la revendication 1, caractérisé en ce que la sortie (CO1) dudit circuit de détection (SENC) est accouplée audit circuit de filtrage (R22, R23, C4) à travers un quatrième circuit (OA4) à amplificateur opérationnel dont le gain est commandé par un deuxième signal binaire (FR) qui est indicatif de ladite résistance synthétisée et de telle manière que la résistance synthétisée présente une valeur correspondante inférieure ou supérieure.

**8.** Circuit de ligne de télécommunication selon les revendications 3, 5 et 7, caractérisé en ce que ledit deuxième circuit à amplificateur opérationnel est constitué par ledit troisième circuit (OA5) à amplificateur opérationnel, la sortie dudit quatrième circuit (OA4) à amplificateur opérationnel étant connecté à l'entrée du trajet direct dudit troisième circuit amplificateur.

**9.** Circuit de ligne de télécommunication selon la revendication 7, caractérisé en ce que la sortie (CO1) dudit circuit détecteur (SENC) est accouplée à l'entrée non-inverseuse dudit quatrième circuit (OA4) à amplificateur opérationnel à travers un circuit parallèle muni d'une première et d'une deuxième branche, ladite première branche comprenant la connexion en série d'un filtre de signal de taxation et d'un réseau de division de tension (R14, R15, C2) et d'un cinquième commutateur (PG1) à transistor et de ladite deuxième branche comprenant la connexion en série d'un filtre (R10, C2) de signal de taxation et un sixième commutateur (PG2) à transistor, lesdits cinquième (PG1) et sixième (PG2) commutateurs à transistor étant commandés par ledit deuxième signal binaire (FR) et son complément (FR) de telle manière qu'ils soient passants quand il est nécessaire de réaliser ladite résistance synthétisée de, respectivement, une valeur inférieure ou supérieure.

**10.** Circuit de ligne de télécommunication selon la revendication 9, caractérisé en ce qu'une tension d'alimentation (VAG) accouplée à l'entrée inverseuse dudit quatrième circuit (OA4) à amplificateur opérationnel via un deuxième circuit en parallèle dont une première branche est composée d'une sixième résistance (R19) et dont une deuxième branche est composée de la connexion en série d'une septième résistance (R17) et d'un septième commutateur (PM1) à transistor qui est commandé de telle manière par ledit deuxième signal binaire (FR) qu'il soit à l'état passant en même temps que ledit sixième commutateur (PG2) à transistor.

**11.** Circuit de ligne de télécommunication selon la revendication 2, caractérisé en ce qu'un circuit de limitation de courant qui est commandé par des signaux (CT0, CT1) de limitation de courant est accouplé entre la sortie (CO1) dudit circuit de détection (SENC) et l'entrée inverseuse dudit deuxième circuit (OA5) à amplificateur opérationnel et est capable de prélever du courant à partir de ladite entrée inverseuse.

**12.** Circuit de ligne de télécommunication selon la revendication 11, caractérisé en ce que ledit circuit de limitation de courant comprend un amplificateur différentiel (N11/14, PM8) muni d'une source commune (PM18, N13, N14) de courant de polarisation ainsi que d'une première et d'une deuxième entrées, la sortie (CO1) dudit circuit de détection (SENC) étant accouplée par ladite première entrée à travers un circuit de commande fournissant un signal de sortie qui est indépendant du sens du courant de ligne et ladite deuxième entrée étant accouplée à la sortie d'un circuit de référence commandé par lesdits signaux de limitation de courant (CT0, CT1) et fournissant à sa sortie une tension de référence sélectionnable.

**13.** Circuit de ligne de télécommunication selon les revendications 4, 7 et 12, caractérisé en ce que ledit circuit de commande comprend un cinquième circuit (OA8) à amplificateur opérationnel qui est commandé par lesdits premier (BR0) et deuxième (FR) signaux binaires de telle manière que dans le cas où il faut réaliser la synthèse d'une résistance plus élevée de valeur supérieure, un gain unitaire, positif ou négatif, est assuré.

**14.** Circuit de ligne de télécommunication selon les revendications 9 et 13, caractérisé en ce que la sortie (CO1) dudit circuit de détection (SENC) est connectée aux entrées non-inverseuse et inverseuse dudit cinquième circuit (OA8) à amplificateur opérationnel à travers ledit circuit commun de filtrage de signal de taxation et les première et deuxième branches individuelles correspondantes, ladite première branche comprenant un huitième commutateur (PM7) à transistor et ladite deuxième branche comprenant la connexion en série d'une huitième résistance (R34) et d'un neuvième commutateur (PM8) à transistor, en ce que l'entrée non-inverseuse dudit cinquième circuit (OA8) à amplificateur opérationnel est connectée à une source d'alimentation (VAG) à travers une neuvième résistance (R35) tandis que son entrée inverseuse est connectée à sa sortie à travers la connexion en série d'un dixième commutateur (PM9) à transistor qui fonctionne en continu et une onzième résistance (R36), et en ce que lesdits huitième (PM7) et neuvième (PM8) commutateurs à transistor sont commandés par les fonctions de Boole respectives $\overline{BR0}$ + $\overline{FR}$ et $\overline{BR0}$ + $\overline{FR}$, où BR0 et FR sont lesdits premier et deuxième signaux centraux binaires et $\overline{BR0}$ et $\overline{FR}$ sont leurs compléments.

15. Circuit de ligne de télécommunication selon la revendication 14, caractérisé en ce que lesdits neuvième (PM8) et dixième (PM9) commutateurs à transistor sont identiques.

**Patentansprüche**

1. Teilnehmeranschlußschaltung einschl. Leitungsverstärker (LOA0/1), deren Ausgänge an die jeweiligen Leiter (LI0/1) einer Fernmeldeleitung über Speisewiderstände (R0/1) gekoppelt sind und einem Widerstandssynthesekreis für die Einstellung eines erforderlichen Widerstandes aus Speisewiderständen, wobei der Synthesekreis Eingänge hat, die mit den Speisewiderständen (R0/1) gekoppelt sind, sowie einen Ausgang (VEET) hat, der mit den Einspeisungseingängen (VEET) der Leitungsverstärker (LOA0/1) gekoppelt ist und wobei der Ausgang gebildet wird durch den Ausgang eines Operationsverstärkers (OA6), der durch eine Steuerspannung (VX) gesteuert wird und mit dem die Eingänge gekoppelt sind und zwar über einen Leitungsstrom-Detektorkreis (SENC = LSDK) und einem WS-Filter (R22, R23, C4), dadurch gekennzeichnet, daß das WS-Filter (R22, R23, C4) direkt mit dem nicht invertierenden Eingang des Operationsverstärkers (OA6) verbunden ist, dessen Ausgang über einen negativen Rückkopplungskreis (P2, R24) mit dem invertierenden Eingang gekoppelt ist, der mit einem Steuerkreis verbunden ist, auf dem die Steuerspannung (VX) ansteht und der in der Lage ist, die Steuerspannung (VX) in einen Steuerstrom umzuwandeln und diesen Strom vom invertierenden Eingang abzuleiten.

2. , Teilnehmeranschlußschaltung gemäß Anspruch 1, dadurch gekennzeichnet, daß die Steuerspannung (VX) mit einem ersten Anschluß eines Vorwiderstandes über einen ersten Darlington-Vorverstärker (N5, N6) aus Transistor-Flächendioden gekoppelt ist, während eine erste Speisespannung (VAG) mit dem zweiten Anschluß des Vorwiderstandes (R31) über eine Reihe von zweiten Transistor-Flächendioden (N2, N3, P5) verbunden ist, von denen die die direkt mit dem zweiten Anschluß verbunden ist, einen Teil eines Emitter-Kollektor-Verstärkers (P6, N7) bildet, dessen Ausgang mit dem invertierenden Eingang des Operationsverstärkers (OA6) über eine Stromquellen/Stromspiegelkonfiguration gekoppelt ist und wobei der Anschlußpunkt des Darlingtonverstärkers und der Transistor-Flächendioden an eine zweite Speisungsspannung (V-) über einen zweiten Kompensationswiderstand (R29) gekoppelt ist, der einen solchen Wert aufweist, daß die Spannungsabfälle in den Reihenschaltungen von ersten und zweiten Transistor-Flächendioden gleich sind.

3. Teilnehmeranschlußschaltung gemäß Anspruch 1, dadurch gekennzeichnet, daß der Ausgang (CO1) des Detektorkreises (SENC) über einen zweiten Operationsverstärker (OA5) mit dem Filterkreis (R22, R23, C4) gekoppelt ist, der eine Reihenverzweigung umfaßt, gebildet durch in Reihe geschaltete dritte (R22) und vierte (R23) Widerstände und eine Nebenschlußverzweigung, bestehend aus einer ersten Kapazität (C4), wobei der dritte Widerstand (R22) einen Nebenschluß aus gegenläufig geschalteten ersten und zweiten Dioden von ersten und zweiten Transistoren (N1 bzw. N2) aufweist, deren Basen und Kollektoren mit dem Ausgang des Operationsverstärkers (OA5) und mit einem negativen Rückkopplungskreis verbunden sind.

4. Teilnehmeranschlußschaltung gemäß Anspruch 1, dadurch gekennzeichnet, daß der Ausgang (CO1) des Detektorkreises (SENC) mit dem Filterkreis (R22, R23, C4) über einen dritten Operationsverstärker (OA5) gekoppelt ist, dessen Verstärkung geregelt wird mittels eines ersten Binärsignals (BR0), das einen ersten oder zweiten Polungszustand der Fernmeldeleitung anzeigt, derart, daß eine entsprechende positive oder negative Verstärkung erzielt wird.

5. Teilnehmeranschlußschaltung gemäß Anspruch 4, dadurch gekennzeichnet, daß der dritte Operationsverstärker (OA5) einen negativen Rückkopplungsweg aufweist, gebildet durch die Reihenschaltung eines kontinierlich arbeitenden ersten Transistorschalters (PM5) und eines fünften Widerstandes (R21) sowie eines Pfades, dessen Eingang verbunden ist mit den nichtinvertierenden und invertierenden Eingängen des dritten Operationsverstärkers (OA5) über einen zweiten (PM2) bzw. dritten (PM3) Transistorschalter, wobei der nichtinvertierende Eingang zusätzlich verbunden ist mit einer Vorspannung (VAG) über einen vierten Transistorschalter (PM4) und wobei die dritten (PM3) und vierten (PM4) Transistorschalter durch das erste Binärsignal (BR0) gesteuert werden, während der zweite Transistorschalter (PM2) durch das Komplement ($\overline{BR0}$) des ersten binären Signales (BR0) gesteuert wird.

6. Teilnehmeranschlußschaltung gemäß Anspruch 5, dadurch gekennzeichnet, daß die ersten und dritten Transistorschalter (PM5 bzw. PM3) identisch sind und die Verstärkung des dritten Operationsverstärkers (OA5) gleich eins ist.

7. Teilnehmeranschlußschaltung gemäß Anspruch 1, dadurch gekennzeichnet, daß der Ausgang (CO1) des Detektorkreises (SENC) mit dem Filterkreis (R22, R23, C4) über einen vierten Operationsverstärker (OA4) gekoppelt ist, dessen Verstärkung gesteuert wird durch ein zweites binäres Signal (FR), das hinweist auf den synthetisierten Widerstand, in der Weise, daß dieser Widerstand einen entsprechend niedrigeren oder höheren Wert hat.

8. Teilnehmeranschlußschaltung gemäß den Ansprüchen 3, 5 und 7, dadurch gekennzeichnet, daß der zweite Operationsverstärker durch den dritten Operationsverstärker (OA5) gebildet wird, wobei der Ausgang des vierten Operationsverstärkers (OA4) verbunden wird mit dem Eingangspfad des dritten Verstärkerkreises.

9. Teilnehmeranschlußschaltung gemäß Anspruch 7, dadurch gekennzeichnet, daß der Ausgang (CO1) des Detektorkreises (SENC) mit dem nichtinvertierenden Eingang des vierten Operationsverstärkers (OA4) über einen Parallelkreis mit ersten und zweiten Abzweigungen gekoppelt ist, wobei die erste Abzweigung eine Reihenschaltung eines Meßsignalfilters und eines Spannungsteilernetzes (R14, R15, C2) und einen fünften Transistorschalter (PG1) umfaßt und die zweite Abzweigung die Serienschaltung eines Meßsignalfilters (R10, C2) und eines sechsten Transistorschalters (PG2) umfaßt, wobei der fünfte (PG1) und sechste (PG2) Transistorschalter von dem zweiten Binärsignal (FR) und dem Komplementsignal ($\overline{FR}$) so gesteuert werden, daß sie leitend sind, wenn der synthetisierte Widerstand mit niedrigem bzw. höherem Wert erreicht werden muß.

10. Teilnehmeranschlußschaltung gemäß Anspruch 9, dadurch gekennzeichnet, daß eine Einspeisungsspannung (VAG) auf den invertierenden Eingang des vierten Operationsverstärkers (OA4) geschaltet wird, und zwar über einen zweiten Parallelkreis, dessen erste Abzweigung einen sechsten Widerstand (R19) aufweist und die zweite Abzweigung eine Reihenschaltung eines siebten Widerstandes (R17) und einen siebten Transistorschalter (PM1) umfaßt, der so von dem zweiten Binärsignal (FR) gesteuert wird, daß er zusammen mit dem sechsten Transistorschalter (PG2) leitend ist.

11. Teilnehmeranschlußschaltung gemäß Anspruch 2, dadurch gekennzeichnet, daß ein Strombegrenzungsschaltkreis, gesteuert durch Strombegrenzungssignale (CT0, CT1), zwischen den Ausgang (CO1) des Detektorkreises (SENC) und dem invertierenden Eingang des zweiten Operationsverstärkers (OA5) gekoppelt ist und in der Lage ist, Strom vom invertierenden Eingang abzuzweigen.

12. Teilnehmeranschlußschaltung gemäß Anspruch 11, dadurch gekennzeichnet, daß der Strombegrenzungsschaltkreis einen Differentialverstärker (N11/14, PM8) einschließt, mit einer Gleichstromquelle (PM18, N13, N14) wie auch mit einem ersten und einem zweiten Eingang, wobei der Ausgang (CO1) des Detektorkreises (SENC) mit dem ersten Eingang gekoppelt ist, und zwar über einen Steuerkreis, der ein Ausgangssignal liefert, das unabhängig von der Richtung des Leitungsstromes ist und wobei der zweite Eingang gekoppelt wird mit dem Ausgang eines Referenzkreises mit Steuerung durch die Strombegrenzungssignale (CT0, CT1), zur Bereitstellung einer selektiven Referenzspannung am Ausgang.

13. Teilnehmeranschlußschaltung gemäß den Ansprüchen 4, 7 und 12, dadurch gekennzeichnet, daß der Steuerkreis einen fünften Operationsverstärkers (OA8) einschließt, der von den ersten (BR0) und zweiten (FR) Binärsignalen derart gesteuert wird, daß eine positive oder negative Verstärkung erzielt wird für den Fall, daß ein höherer synthetisierter Widerstand mit höherem Wert erreicht werden soll.

14. Teilnehmeranschlußschaltung gemäß den Ansprüchen 9 und 13, dadurch gekennzeichnet, daß der Ausgang (CO1) des Detektorkreises (SENC) verbunden ist mit den nichtinvertierenden und invertierenden Eingängen des fünften Operationsverstärkers (OA8), über das Meßsignalfilter, bzw. den ersten und

EP 0 237 656 B1

zweiten individuellen Abzweigungen, wobei die erste Abzweigung einen achten Transistorschalter (PM7) und die zweite Abzweigung eine Reihenschaltung eines achten Widerstands (R34) sowie einen neunten Transistorschalter (PM8) umfaßt, wobei der nichtinvertierende Eingang des fünften Operationsverstärkers (OA8) mit einer Stromquelle (VAC) über einen neunten Widerstand (R35) verbunden ist, während der invertierende Eingang mit dem Ausgang verbunden ist und zwar über eine Reihenschaltung eines kontinuierlich arbeitenden zehnten Transistorschalters (PM9) und eines elften Widerstandes (R36) und wobei der achte (PM7) und der neunte (PM8) Transistorschalter durch die jeweiligen Boleanschen Funktionen $\overline{BR0} + \overline{FR}$ und $BR0 + \overline{FR}$ gesteuert werden, wobei BR0 und FR die ersten und zweiten binären Signale darstellen, und $\overline{BR0}$ und $\overline{FR}$ die komplementären Signale hierzu sind.

15. Teilnehmeranschlußschaltung gemäß Anspruch 14, dadurch gekennzeichnet, daß der neunte (PM8) und zehnte (PM9) Transistorschalter identisch sind.

16

# FIG.1

EP 0 237 656 B1

FIG.2

DCFC

FIG.3

CLC

EP 0 237 656 B1